# EUROPEAN PATENT APPLICATION

(11) **EP 1 383 065 A1**
(43) Date of publication of application: **21.01.2004**
(21) Application number: 03077000.2
(22) Date of filing: 27.06.2003
(51) Int. Cl.: G06F 17/60

(54) **Business driven learning solution**

(30) Priority: 28.06.2002 US 391929 P; 28.06.2002 US 391932 P; 07.10.2002 US 265156
(71) Applicant: Accenture Global Services GmbH, 8200 Schaffhausen (CH)
(72) Inventor: Draper, William Christopher, Jr., New York, NY 10021 (US); Allen, William Mark, Millburn, NJ 07041 (US); Stovall, Thomas Kenneth, Marietta, GA 30067 (US); Hubbell, John R., Evanston, IL 60201 (US)
(74) Representative: Siniscalco, Fabio

(57) **Abstract**

Disclosed are learning solutions and related methods for managing the learning and training needs of an organization in a manner that is responsive to dynamic business timelines, goals and strategic objectives. The learning solutions and related methods employ modules of interrelated and interdependent business processes for the identification and prioritization of learning needs, the selection of learning approaches, the development of learning content, the coordination and delivery of learning instruction, and the overall management and administration of learning efforts. Also disclosed are networks of learning platforms that together implement the learning solution by providing electronic tools and information sharing capabilities needed by a learning solution services provider to efficiently implement and manage learning efforts according to the business desires of a complex learner organization. Embodiments of the inventions disclosed utilize the tracking and reporting of various performance metrics to enable allocating of learning effort charges as expenses to internal business units or external business organizations so as to enable cost-responsive outsourcing of a organization's learning needs.

## Description

### Cross Reference to Related Applications

This application claims the benefit of the filing date of U.S. provisional patent application Serial No. 60/391,929, filed June 28, 2002, and U.S. provisional patent application Serial No. 60/391,932, filed June 28, 2002.

### Field of the Invention

The present invention relates to a learning solution and related methods for managing the learning and training needs of an organization in a manner that is responsive to dynamic business needs. In particular, the present invention relates to learning solutions that are responsive to an organization's business timelines, goals and strategic objectives so as to enable an organization to have its learning needs managed effectively in a manner similar to the management of a traditional business.

### Background of the Invention

Employee training and education is becoming increasingly more and more critical to the success of organizations within today's modern global economy. As a minimum requirement to remaining competitive, companies that operate in today's complex industries need employees who remain knowledgeable and current in areas of expertise that serve the companies' ever-evolving strategic objectives. Executives of such companies feel this need for improved learning solutions as it is brought to the forefront of their strategic objectives by various business imperatives of the competitive market.

For example, one such business imperative felt by the executives of many companies is need to accelerate their "clock speed" when introducing new or repositioning existing product offerings. A difficulty faced by learning systems in supporting this rapid change in business positioning is that many different individuals in a given company perform many different functions and therefore require different types of training to implement a single change in business position. Sales forces in particular must be effectively trained regarding new product features and value propositions before the best sales results can be obtained. Similarly, new positioning of existing products (e.g., bundling groups of products and/or services together to provide improved solutions to clients) requires sales forces to understand not just products individually, but their interplay in forming solutions for target clients in order to effectively implement this strategic business objective. The longer such training takes, the more the implementation of strategic business objectives is delayed.

Likewise, learning capabilities of a company must be able to support organization growth and expansion. Leaders of companies may be forced to forgo undertaking bold yet lucrative business growth plans, because bold growth plans require that the company has the ability to rapidly attract, train, and/or deploy a skilled workforce. Thus, improved learning capabilities are needed that accelerate the training speed and speed to competency of an entire workforce.

Similarly, company executives may have a business imperative requiring the initiation of a culture change within the company that will enable a pre-existing workforce to more easily adapt to the company's changing business focus. Learning solutions must therefore also serve as a tool to drive culture change within an organization as an executive's desire to drive a new corporate mindset often has a strong learning component. Common culture change themes that require significant learning efforts include quality control changes, initiatives to increase shareholder value, and steps for adopting a customer-centric business focus.

Furthermore, corporate mergers and reorganizations are commonplace occurrences in many of today's markets and industries. Such mergers and reorganizations often necessitate massive post-merger/reorganization integration efforts by the remaining companies. This not only requires reconciling pre-existing business goals and strategies, but also integrating and upgrading educational and training efforts within the remaining corporate entities. Improved learning solutions are therefore needed to deal with such occurrences by being able to easily modify existing training efforts to match the changing business environment.

Finally, the management of contemporary companies often view their companies' internal training organizations or efforts as bloated cost centers with very little visibility into cost allocation and virtually no accountability when it comes to returning adequate value on learning investments. Since companies are always looking across their organization to identify ways to manage costs, it would be beneficial if learning solutions were able to be used to allocate learning and training costs accurately across different business units and ventures so as to facilitate cost management. It would be further beneficial if such learning solutions could be used to generate strategic cost reductions or even spur or generate profits. With a proper learning solution, it is possible that training can be leveraged outside the organization for revenue growth and cost savings opportunities. Some examples of this include leveraging corporate knowledge in a new way to create a new source of revenue, using training to align value chain partners, or reducing support costs by placing information with the customer.

Thus, business organizations are increasingly beginning to recognize the need for improved training organizations that are responsive to the foregoing business imperatives but which still deliver results that stay aligned with evolving business strategies. Education within modern companies, however, remains problematic for various reasons. One major complicating factor is the nature of many modern corporations. Often, they are diverse entities that operate globally across international boundaries and in different competitive markets and business areas. Organizations or groups within such modern companies that are charged with learning course or content development and management of learning services are often poorly equipped (either in terms of personnel allocation, organization of the learning assets, infrastructure, or otherwise) to serve all the learning needs of those companies. As such, learning service organizations or groups are often plagued with outdated course content and/or inefficient management services that fail to utilize current technologies to dynamically develop and deliver meaningful courses and related necessary course materials.

For example, contemporary companies often use their human resource departments or other administrative departments to offer instructor-led training courses for employees at a central location. While this approach may appear attractive from a purely financial perspective because it limits personnel and infrastructure costs, this solution becomes less suitable when the employee students are located in various remote areas (thus requiring travel) and/or have independent, conflicting schedules of availability for instruction. Furthermore, recruiting and training qualified instructors requires significant effort and specialized skills from a learning organization's coordinators. Thus, this approach is less suitable as the number of necessary instructors grows (such as where many courses are needed or where the same is course is needed in various languages).

Computers have been increasingly employed to address many of the logistical issues linked with coordinating the delivery of learning content and/or instruction that needs to be taught multiple times, that needs to be taught to large numbers of students who are remotely located, and/or that needs to be taught to a student body that has conflicting schedules of availability. For example, computer-delivered instruction systems are available wherein students can receive instruction via a computer over a network by accessing a central repository of previously prepared electronic learning ("e-learning") content courses and/or materials stored on a remote server. This approach can be used to provide independent, self-paced instruction on a student by student basis whereby each student can log on to the remote server and access desired e-learning instructional content at any time. Unfortunately, the compiling and maintenance of self-paced computer delivered training requires both subject matter and technical expertise and much development effort to approach the level of effectiveness of classroom training with an instructor. Additionally, such computer-delivered instruction systems are unfortunately not ideal for all types of learning needs, such as where group activities, student-to-student or student-to-instructor interaction are essential for optimum learning.

Computer networks have likewise been used to provide virtual classrooms where a single instructor teaches a large number of remotely located students simultaneously using web conferencing, remote presentation or like technologies. While the virtual classroom approach can reduce personnel, travel and physical infrastructure needs and still retains the flexibility of relatively easy course content updating, it does not allow self-paced instruction for students having independent and conflicting schedules of availability. Students of a virtual classroom still have to "attend" class at a pre-scheduled time as opposed to reviewing computer delivered content whenever they have available time or wish to work on a given course. Furthermore, virtual classroom technologies can require that access for every remote student be made via a highly robust computer network capable of handling high bandwidth communications applications. Many organizations simply will not have the technical infrastructure to be able to utilize virtual classrooms for all of their learning needs.

Another disadvantage of contemporary learning solutions is that they fail to provide the ability for executives to monitor performance of learning solution efforts in achieving their underlying purpose of furthering business strategies. It would be helpful if executives had access to various performance or success metrics that measure the performance of a given learning solution similar in manner to how performance is measured in traditional performance driven areas of their core business. Useful metrics relating to a learning solution could include, for example, output-related metrics that indicate course hours produced or student days delivered, and metrics which attempt to quantify the success training is having in serving its intended purpose. The inability to accurately monitor performance metrics leaves organizations and their learning services with aninability to ensure service quality, allow for accurate resource forecasts, allocate costs and provide a means to measure the learning solution's success helping the organizations meet goals and commitments. This aspect makes it difficult for executives and learning administrators to make certain that ongoing and future learning efforts are continuously aligned with business strategies, priorities and goals. Likewise, it is difficult for executives and learning administrators to make certain that funds invested in learning activities are being spent wisely to further the stated business strategies, priorities and goals.

The identification and prioritization of learning needs, the selection of learning approaches, the development of learning content, the delivery of learning instruction, and the overall management and administration learning efforts and content require learning solutions that are responsive to business strategies, imperatives, and logistical factors. Contemporary learning solutions employed in the business world have failed to integrate the many complicated processes and systems that must be implemented to ensure that a given company's learning efforts meet their learning needs as dictated by prioritized business strategies.

Thus, there remains a need in the art for an improved learning solution and related methods that overcome the above-described and other problems associated with current learning solutions. Such a solution preferably utilizes a customizable blend of computerized on-line instructional systems and instructor based services that allow for the efficient distribution of course content and materials as well as enhance the system response time to instructor, student, and/or resource concerns and issues. The aforementioned learning solutions and related methods should provide the ability to respond quickly and efficiently to logistical and resource concerns. Furthermore, there is a need for an improved learning solution and related methods that ensure that ongoing learning efforts are aligned with the business strategies and learning objectives as measured by quantifiable performance metrics.

### Summary of the Invention

In light of the above-described and other deficiencies inherent in contemporary learning solutions, it is an object of the present invention to provide a learning solution and related methods that ensure that an organization's instructional content and delivery mechanisms are aligned with the business and learning objectives of that organization. Such learning,solutions and related methods are capable of dramatically improving an organization's efficiency by identifying, prioritizing, developing and delivering employee training efforts and by providing dynamic system monitoring capabilities that ensure the effectiveness of the critical employee training efforts.

Concurrently, it is an object of the present invention to provide a learning solution and related methods that are driven by business strategies and priorities in all aspects of learning. Such aspects of learning include the identification and prioritization of learning needs, the selection of learning approaches, the development of learning content, the coordination and delivery of learning instruction, and the overall management and administration of learning efforts.

Further, it is an object of the present invention to provide a learning solution and related methods that adapt the delivery of desired instruction to the most suitable mechanisms, including instructor led training, virtual classroom training, computer delivered instruction, printed reading materials, and appropriate combinations thereof.

Additionally, it is an object of the present invention to provide a learning solution and related methods that utilize processes and electronic communication and management tools for permanently interlocking learning efforts with business goals and strategies. Such processes and tools enable course instructional content to be easily modified and updated by learning solution administrators, learning effort and/or course administrators, or instructors in response to changing business strategies and priorities.

Additionally, it is also an object of the present invention to provide a learning solution that allocates learning costs and bills appropriate business units or projects for learning effort expenditures such that the solution can be implemented by a business partner or subunit organization operating independently like a separate business entity from the organization requesting/needing the learning services. In this manner, learning services needs of an organization can either be outsourced to a separate business entity or still managed internally as an independent business unit with the same built-in imperatives to reduce costs and drive profit centers as those business units and/or external organizations that will ultimately pay for the learning services.

Also, it is an object of the present invention to provide a learning solution and related methods that may be readily embodied in a network of learning systems that comply with relevant e-learning standards. In this manner, the learning systems may be made accessible over any computer network, including the Internet, through an open architecture that enables a business to integrate such learning solution systems with its existing network's applications and infrastructure.

Likewise, it is an object of the present invention to provide a learning solution and related methods that are embodied in a network of learning systems which enhance the learning solution's response time to instructor, student, and/or resource concerns and issues.

Furthermore, it is an object of the present invention to provide a learning solution and related methods that are embodied in a network of learning systems which facilitate the monitoring, organization, and reporting of learning solution performance metrics that enable efficient coordination of learning efforts with business strategies and priorities.

To achieve these and other objects, the disclosed learning solutions and related methods according to the present invention manage the learning and training needs of an organization in a manner that is highly responsive to dynamic business needs. Among other things, the learning solutions and related methods disclosed are responsive to an organization's business timelines, goals and strategic objectives so as to enable the organization to have its learning needs managed effectively in a manner similar to the management of a traditional client services business.

Learning solutions according to embodiments of the present invention comprise four basic modules of interrelated and interdependent business processes for the identification and prioritization of learning needs, the selection of learning approaches, the development of learning content, the coordination and delivery of learning instruction, and the overall management and administration learning efforts. The interaction of the various modules of business processes with one another helps to define the services, performance metrics and application capabilities, among other things, required to support an optimized outsourced solution to meet a given organization's business learning objectives. One of the four basic modules comprises a business strategy alignment module to accept business strategy input from the learner organization, prioritize learning requests/needs and assist in developing and delivering appropriate learning efforts by communicating relevant information to processes in the various other modules of the learning solution. Learning solutions according to the present invention also include a content management module that manages the processes that are developed internally, or alternatively licensed from external sources, the learning content necessary to implement the learning efforts identified and prioritized by the business strategy alignment module in light of logistical concerns. Content management modules according to embodiments of the invention can also tag and catalog learning content, such as in the form of a database of reusable knowledge objects, appropriately such that it can be reused in future learning efforts as appropriate and also that it may be easily accessed for delivery to the learner as required.

The learning solutions according to embodiments of the present invention also comprise a delivery module that implements the business processes used in the learning solutions for coordinating the delivery of high quality training across a plurality of media in a cost efficient manner. Learning efforts provided by the learning solutions according to the present invention in response to learning requests are therefore able to utilize combinations of instructor led training ("ILT"), virtual classroom training (such as with a live instructor connected to students through videoconferencing or over a computer network like the Internet), printed instructional materials and interactive computer software-based training mechanisms. Further, the delivery module coordinates the processes of allocating and scheduling of the use of facilities where training takes place and other resources with appropriate instructor and learner commitments.

Additionally, learning solutions according to embodiments of the present invention comprise a learning administration module that facilitates centralized learning management and administrative services across the entire learning solution. Such learning administration modules enable, among other things, the solution to provide registrar functions including tracking the training records of students and the availability of course offerings. Specific learning administration processes can include curriculum management, course registration, course fulfillment support, and record keeping of training results.

In certain preferred embodiments of the invention, the learning solution also includes a business management module that facilitates the overall operation of the learning solution with and/or within the learner organization. The business management module comprises processes and mechanisms that manage the overall lifecycle of a learning initiatives and efforts and provide continuous improvement to currently ongoing and future learning initiatives and efforts. The business management module assesses the learning solution's compliance with overall strategic initiatives and business priorities of the learner organization using performance metrics which are tracked and compiled by various aspects of the learning solution, and also optionally uses those performance metrics to handle financial settlements regarding the rendering of learning services to various entities.

Embodiments of the learning solution of the present invention are preferably implemented in a network of learning platforms that together provide the electronic tools and information sharing capabilities needed by a learning solution services provider to efficiently implement and manage learning efforts according to the business desires of a complex learner organization. The platforms provide coordination and synchronization of learning content development, delivery and management so as to enhance the learning solution's response time to instructor, student, and/or resource concerns and issues. Such learning solution networks comprise a resources synchronization platform, a content development platform, an electronic delivery platform, and a learning administration platform, all of which communicating electronically with one another. Preferably, the learning solution networks also track information relating to the learning solution and its learning efforts and provide visibility of that information to facilitate business management processes.

In preferred embodiments of the present invention the learning solution is implemented by an independent business entity that is acting according to a service level agreement with an organization in need of learning services outsourcing. A service level agreement is a contract between the learning solution services provider and the licensing (i.e., outsourcing) organization that establishes the requisite quality and effectiveness levels of the learning solution services as measured by one or more pre-selected performance metrics. Suitable metrics can relate to measurements of the output of a learning solution (e.g., instructional course-hours developed or delivered), measurements of performance level of learning efforts provided by the learning solution (e.g., student satisfaction, test and/or certification results), and measurements of the business impact of learning efforts (e.g., improvements in employee productivity following training). The terms of a service level agreement may require (as compared with the levels measured before the implementation of a given learning effort), for example, minimum learning-output metrics values relating to increases in student enrollment and course hours, minimum learning-performance metrics relating to employee certifications, and minimum learning-impact metric increases regarding gross sales generated by each trained salesperson. Such outsourced learning solution track and report pre-selected performance metrics to the outsourcing organization on a continuous basis to facilitate cost allocation among appropriate business units or to specific learning efforts (equivalently, "training efforts"), and uses them according to business management processes within the learning solution to gauge the level of effectiveness of particular learning efforts in helping the organization reach desired business objectives and thus refine future learning efforts.

The invention having been thus described, preferred embodiments thereof will now be described in detail with reference to several figures.

### Brief Description of the Drawings

Fig. 1 is a schematic diagram depicting the interaction of the basic modules of a learning solution according to embodiments of the present invention.
Fig. 2a is a flow diagram depicting a preferred process utilized in embodiments of the present invention to enable alignment of learning efforts with prioritized business strategies.
Fig. 2b is a diagram depicting an exemplary learning blueprint that could be utilized in preferred embodiments of the invention to prioritize and fund learning efforts implemented by learning solutions of the invention.
Fig. 2c and Fig. 2d are diagrams depicting the mapping of plans for learning efforts onto a learning blueprint according to preferred embodiments of the present invention.
Fig. 3 is a flow diagram depicting an iterative process for developing learning content according to embodiments of the present invention.
Fig. 4 is a schematic diagram depicting the interaction of delivery sub-modules of a learning solution according to embodiments of the present invention.
Fig. 5 is a schematic diagram depicting a network of learning platforms that communicate to provide coordination and synchronization of learning content development, delivery and management so as to enhance the learning solution's response time to instructor, student, and/or resource concerns and issues.

### Detailed Description of the Preferred Embodiments

As used hereafter, the term "organization" is used broadly to identify the business entity that is in need of a solution to provide learning services. The learning solutions according to the present invention can either be outsourced by such organizations (whereby the processes of the learning solution are implemented by a third party learning services provider under contract to an organization) or can be implemented internally within the organization (as, for example, an independent business unit within the "outsourcing" organization). In embodiments of the invention wherein a learning services business unit within an organization provides learning services to other business units within the organization, the learning services business unit would still feel the need to satisfy customers as it would be responsible for generating a "profit" by meeting predefined performance metrics set by "client" business units (i.e., the other more traditional business units of the organization) and allocating learning effort charges as expenses to the client business units as appropriate. In this manner, the learning solutions according to the present invention can said to be "outsourceable" by an organization.

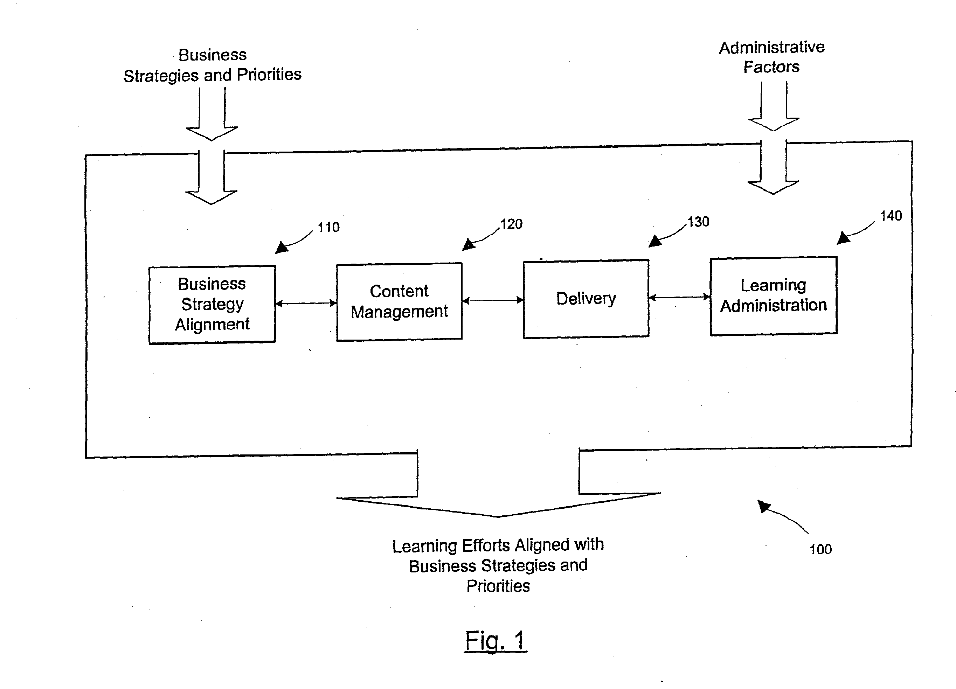

A learning solution 100 is conceptually depicted in the schematic diagram of Fig. 1. Solution 100 comprises modules of interrelated and interdependent business processes, which may be automated by electronic tools provided by various communication platforms as will be described in more detail below, that manage and coordinate the learning solution tasks of the prioritization of business learning needs and selection of learning effort approaches, the development of learning content, the delivery of learning content and instruction, and the administration of learning solution performance. The interaction of the various modules of business processes with one another helps to define the services, performance metrics and application capabilities, among other things, required to support an optimized outsourceable learning solution to meet a given organization's business learning objectives.

As depicted in Fig. 1, business strategy alignment module 110 comprises processes that identify business strategies of the organization and accept requests for learning efforts (e.g., employee training in a particular product line) from the organization (and/or its business units). It then aligns the organization's overall learning solution goals and the objectives of requested learning efforts with the organization's current strategy, business objectives and organizational structure. The processes comprising the business strategy alignment module thereafter identify potential learning efforts to meet the objectives of the organization, and support the downstream development and delivery of a tailored learning curriculum by providing relevant information to processes in the various other modules (120, 130 and 140) of solution 100. This alignment ensures that learning curricula is designed to meet the organization's most current needs.

Once solution 100 identifies what types of learning or curriculum are desired and/or required by the organization and prioritizes them, the solution is also able to deliver suitable learning materials to fill those needs. Content management module 120 includes processes and associated tools required to build and/or buy appropriate learning content based upon learning objectives and delivery requirements. On one hand, it may be easier and cheaper to buy precompiled learning content from a third party as opposed to developing or compiling new content. Alternatively, the specialized needs of the organization may make it difficult to utilize outsourced or precompiled learning or training content. Content management module 120 facilitates solution 100 taking factors such as these appropriately into consideration when assembling suitable learning content.

After learning content has either been obtained from a third party or developed internally by the learning solution, the business processes of content management module 120 also create, manage and operate a central repository of learning content and knowledge objects. The learning content and knowledge objects are appropriately formatted, tagged and cataloged such that they can be reused as appropriate and may be easily accessed for delivery to the learner in the desired manner when scheduled or requested.

Delivery module 130 in turn contains business processes and related tools for providing the delivery of high quality training across a plurality of synchronous and asynchronous media in a cost efficient manner. The delivery business processes in module 130 facilitate, for example, instructor led training, virtual instructor led training (such as with a live instructor connected to students through videoconferencing or over a computer network like the Internet) including virtual classrooms, and interactive computer software-delivered training systems for self-paced learning. Further, the delivery business processes in module 130 manage coordinating the scheduling of the facilities where training takes place with appropriate instructor and learner commitments.

Still referring to Fig. 1, learning administration module 140 contains business processes and associated tools necessary to provide learning management and administrative services across the entire learning solution 100. Exemplary learning administration business processes include individual curriculum management, course registration, course fulfillment management, and record keeping of training results.

Preferably, the learning solution 100 also includes a business management module (not depicted in FIG. 1) operating in communication with modules 110-140 and facilitating the overall operation of the learning solution with and/or within the learner organization. The business management module comprises processes and mechanisms that manage the overall lifecycle of a learning initiatives and efforts and provide continuous improvement to currently ongoing and future learning initiatives and efforts. The business management module assesses the solution's compliance with overall strategic initiatives and business priorities of the learner organization by reviewing performance metrics that are tracked and compiled by various aspects of the learning solution, and also optionally uses those performance metrics to handle financial settlements regarding the rendering of learning services to various entities. The business management module thereby provides the learning solution with the capability to manage the overall lifecycle of learning initiatives and efforts and to provide continuous improvement to currently ongoing and future learning initiatives and efforts in a "profit-driven" manner.

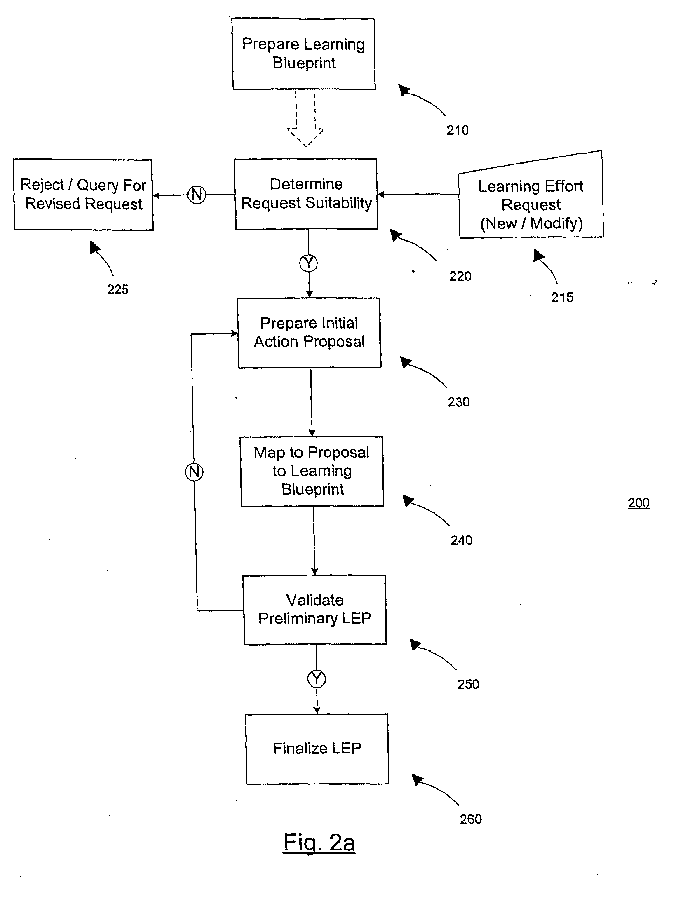

The processes of the business strategy alignment module 110 are central in ensuring that the learning efforts produced by the learning solution entities are completely aligned with the strategic objectives of the organization. The business strategy alignment module 110 passes the requests from the organization (or business units thereof) for new learning efforts or for modified learning efforts through a formal process whereby the requested learning effort becomes cast in a consistent direction with organizational strategic objectives and priorities, funded from appropriate budget allocations, and transformed into a work in progress by the learning solution 110. Referring now to Fig. 2a, a business strategy alignment process 200 utilized in preferred embodiments of the present invention is depicted and comprises various steps that enable newly requested and ongoing learning efforts to be aligned with prioritized business strategies and goals.

As depicted in Fig. 2a, business strategy alignment process 200 first prepares 210 a customized learning blueprint for the organization. A learning blueprint provides a grouping and organization of various business strategies and goals across the entire organization and identifies potential areas of learning. Each organization's learning blueprint is therefore unique and is used by the business strategy alignment process 200 and therefore module 110 to determine which potential learning efforts (from the many requested by various entities within the organization) introductions or modifications are funded (including from which budget allocation and to what amount) and pursued (i.e., if the requested learning effort consistent with one or more stated learning strategies or objectives reflected in the blueprint) and exactly how the request is fulfilled (i.e., requested learning efforts that map to higher organizational priorities may be entitled to different funding or resources). An organization's learning blueprint is typically reviewed and revised periodically by the business strategy alignment module 110 for the organization (typically in light of information provided by the business management module), such as once or twice a fiscal year to reflect changing business strategies and learning services budgets. Of course, an organization's learning blueprint can be reviewed and revised at any time whenever significant changes in the learning focus and business strategies or priorities of the learner organization occur.

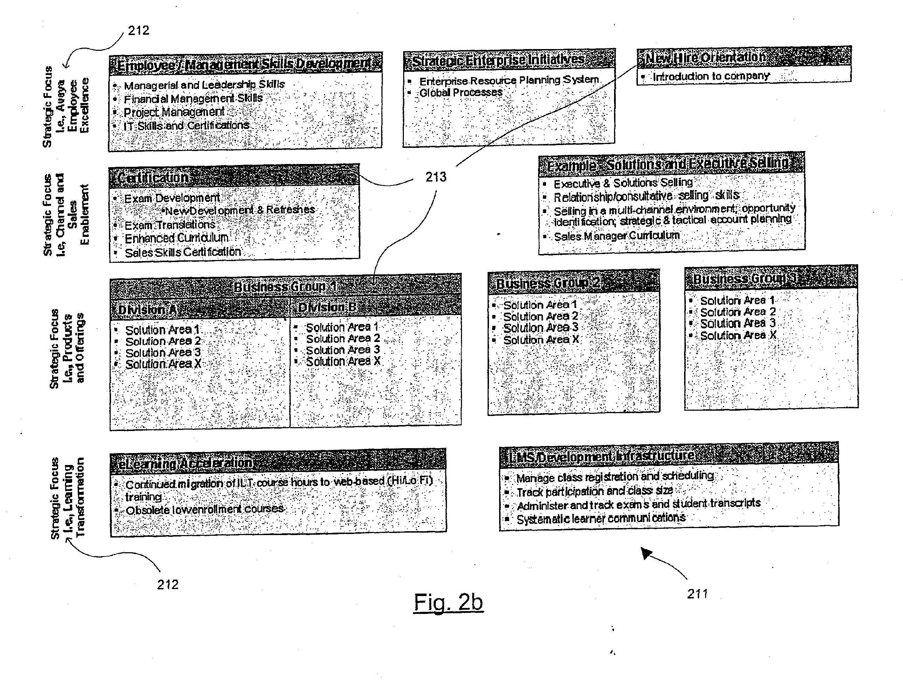

Fig. 2b depicts an exemplary learning blueprint 211 that could be utilized to prioritize and allocate funding to learning efforts implemented by learning solutions of the invention for a particular hypothetical organization that is outsourcing its learning needs. As shown in Fig. 2b, a learning blueprint 211 itemizes different strategic objectives of the organization into various tracts 212 which can represent, for example, organizational areas of focus, product groups, business units, or departments within the organization. For a given organization, as depicted in learning blueprint 211, a tract can be assigned, for example, for product segments, sales skills, general employee development and organization culture transformation. For each such tract, the learning blueprint itemizes initiatives 213 that reflect particular areas in which the organization expects to focus a significant portion of its attention and expenditures on learning efforts. Thus, an employee development tract can contain separate initiatives for new employee orientation, and training regarding an upcoming organization-wide computer system change. Similarly, the product segment tracts can include separate initiatives for major product lines (e.g., custom database solutions) or even individual products of high priority (e.g., new products introducing new product lines). For each tract 212 and/or each initiative 213 itemized within the learning blueprint 211, overall budget caps can be assigned to assist the learning solution in obtaining, managing and delivering learning content that serves the strategies and priorities of the organization.

Referring again to Fig. 2a, the business strategy alignment process 200 initially receives a request 215 for learning services (a "learning effort request") from an individual or business unit of the organization. The learning effort request details what the individual or business unit submitting the request believes is an important learning need that requires a new or modified learning effort. According to embodiments of the invention, a learning effort request can be made in any form, including a verbal communication, a voicemail message, a letter, or an email message directed to a contact for the business strategy alignment module. Preferably, the request is provided on a standardized form (which, even more preferably, can be electronically submitted) that is completed by the requesting entity, and where the form contains queries designed to elicit sufficiently detailed information that allows the business strategy alignment module contact to understand the request sufficiently. After receiving a learning effort request, an initial determination 220 is made regarding whether the request is addressable through training efforts or whether it would alternatively be best addressed through more simple measures like documentation or a newsletter produced by the resources of the requesting business unit of the organization. In the event that the learning effort request is not deemed suitable for the learning solution, at step 225 a rejection is sent to the requester. Alternatively, at 225, a query for a more detailed learning effort request is sent to the requester.

Whenever a learning effort request is deemed to present a learning need that is addressable by the learning solution, process 200 prepares 230 an initial action proposal for the requested learning effort in the form of a preliminary learning effort plan ("preliminary LEP"). The preliminary LEP makes a pre-production judgment as to the type of delivery that will be most advantageous (Web-based course for self-paced instruction, a course involving live or virtual classroom time with an instructor, etc.) given the learning effort request and likely logistical/budget constraints, and whether the request should be addressed by creating wholly new learning content or by modifying the content of an existing learning effort.

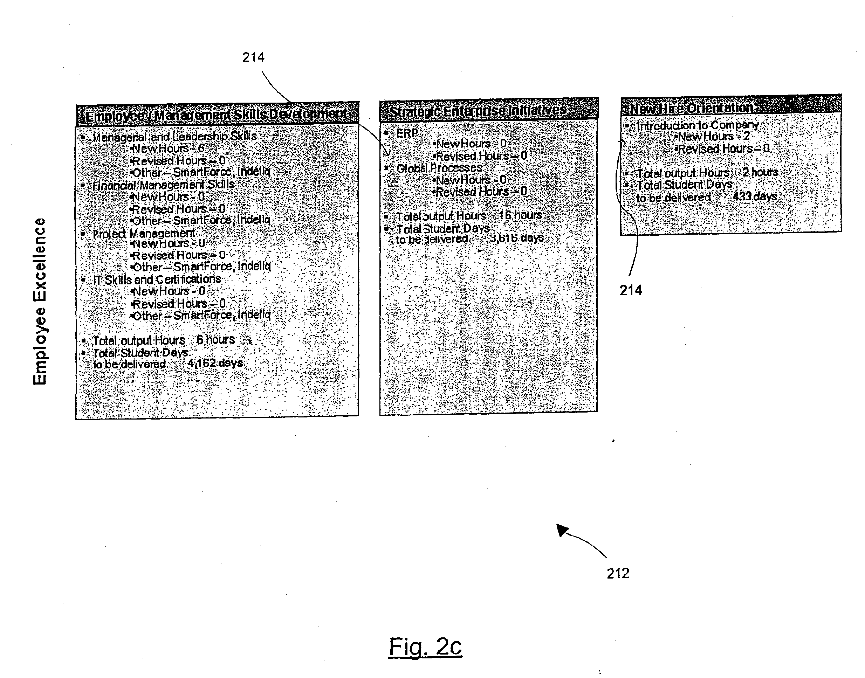

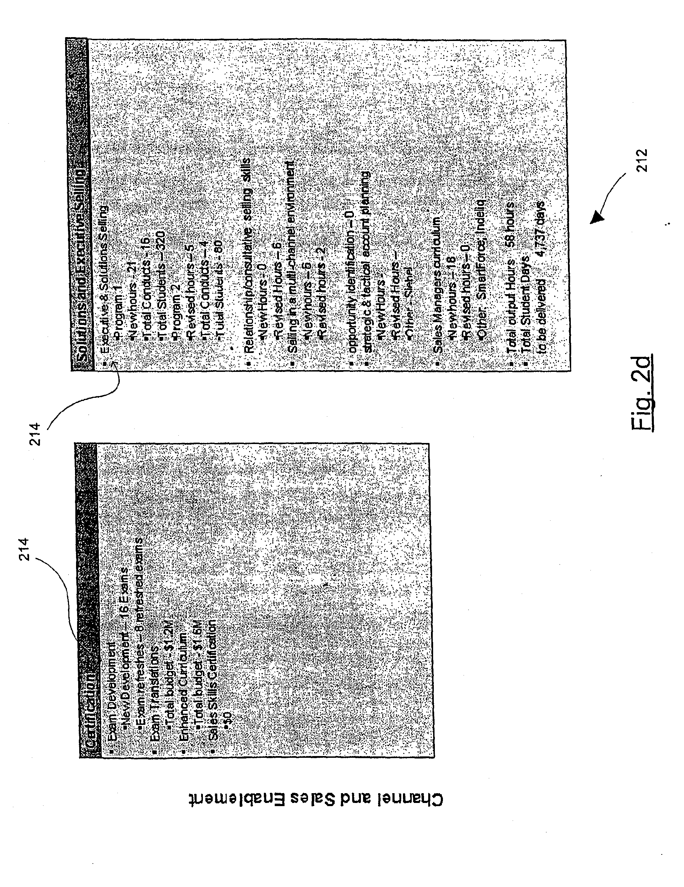

In certain preferred embodiments of the invention, the learning solution adopts a learning effort cost schedule which provides a standard set of prices or charges that will be "charged" to the requesting entity for each type of content development or delivery type that can be utilized in preparing a learning effort in response to a learning request. For example, a first rate could be charged for each hour of high-fidelity web-based training content developed, a second rate could be charged for each hour of low-fidelity computerized content developed, and a third rate could be charged for each hour of instructor-led training actually delivered. Therefore, when a new learning request is received, the initial action proposal as detailed in the preliminary LEP gets mapped at step 240 into one of the tracts/initiatives in the learning blueprint 211 as appropriate. Alternatively, of course, the cost that will ultimately be charged to the requesting entity can be estimated in a custom manner on a case-by-case basis when necessary or preferred. Once a price or charge has been estimated for the initial action proposal, that estimated price is compared against the budget restraints for the tract and/or initiative to which the effort is mapped. Fig. 2c and Fig. 2d depict in exemplary fashion the mapping of learning effort plans 214 onto various tracts 212 and initiatives 213 of learning blueprint 211 according to certain preferred embodiments of the present invention.

At 250, a validation check is made to assess whether the preliminary LEP is feasible given budget priority restraints imposed by the current learning blueprint. If it is not, process 200 returns to step 230 and revises its initial action proposal to produce a modified (e.g., scaled down or re-targeted within the learning blueprint) preliminary LEP. This modified preliminary LEP is then mapped to the learning blueprint (as before, again at step 240) using a revised cost estimate, and the validation check is repeated (at step 250). This process loop repeats itself until the validation check is successful, which indicates that the action proposal fits within business goals and priorities (as evidenced by, among other things, budget allocations associated with the learning blueprint). At this time, a finalized learning effort proposal ("LEP") is prepared 260 for use by the content management module 120. This LEP contains more detailed budget allocation information, delivery timelines, and initial content design requirements for use by the other modules of learning solution 100.

As will be appreciated by one skilled in the art, in performing some of the processes of the business strategy alignment module 110 it may be necessary for person to person interaction to occur between learning administrators and executives or managers of the learner organization. For example, in preparing and revising a learning blueprint and in establishing budget allocations for learning initiatives it may be necessary for the business strategy alignment module 110 to interface with the learner organization in order to identify and prioritize business strategies. In certain preferred embodiments of the invention, such an interface can be provided by a learning management council comprised of representatives from the learner organization. Optimally, the representatives are taken from all major segments of the organization's business, such as various product segments, business groups, administrative groups (e.g., human resources and information technology), and regional/international divisions and channels, to provide a comprehensive interface with the ever-changing goals of the organization. This learning management council could thereby serve as an intermediary between learning administrators and strategy-driving upper management of the learner organization.

The learning solution 100 according to preferred embodiments of the present invention can facilitate the dissemination of critical learning information by internally developing deliverable learning content that is consistent with the needs of a specific organization. By aligning the development of the information with an organization's business objectives and strategies, the learning solution 100 presents the critical information to the students in a logical, intuitive and valuable manner that is designed to enhance student receptivity and knowledge retention.

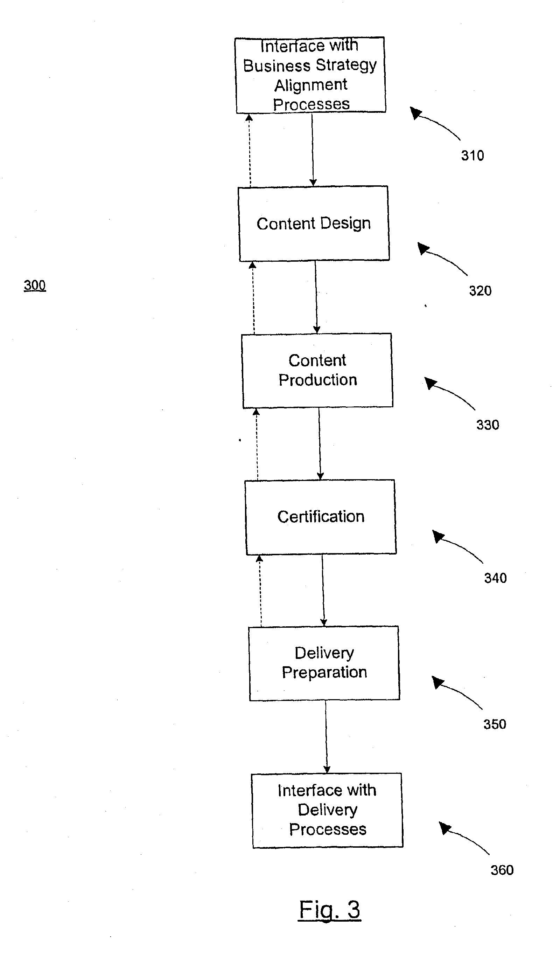

A particular process implemented in content management modules 120 of a learning solution 100 according to such preferred embodiments is conceptually depicted in the flow diagram of Fig. 3. Specifically, Fig. 3 shows a content development process 300 that embodies a combination iterative steps that enable a learning solution to leverage benefits of the business strategy alignment module processes and thereby identify, develop, and manage deliverable learning content internally for an organization's required learning efforts. Content development process 300 starts by interfacing 310 with business strategy alignment processes to receive information regarding the learning content that needs to be developed for a learning effort (such as by receiving a LEP produced according to the process 200 of Fig. 2a above). This passage of business strategy alignment information helps to ensure that any new or modified learning materials and content are always aligned with the business learning strategies and objectives of a licensing organization. The business strategy alignment information, such as in the form of a LEP, is then passed down (and possibly revised as described below) through the various subsequent steps of content development process 300, including content design 320, content production 330, certification 340, and delivery preparation 350 until it is ultimately handed off with any newly-developed deliverable learning content at step 360 by interfacing with the processes of the delivery module.

In operation, upon receiving the initial content design requirements from the business strategy alignment processes (such as in the form of a LEP), the content design step 320 leverages technology and organization services to implement a series of functions, tests, and analyses to produce an initial layout of any new content that needs to be developed for a given learning effort. The functions, tests, and analyses performed during content design 320 include performance strategy and role impact strategy to make an initial assessment regarding a recommended instructional design (i.e., whether to utilize computer delivered self-paced courses, instructor-led training ("ILT"), virtual classrooms, etc.). In making this initial assessment, care is taken to perform audience analyses and environment analyses to ensure that the chosen instruction design is not incompatible with the logistics of the learning audience (e.g., whether it is feasible to expect the learners to be able to attend pre-scheduled live classes with an instructor) or with learning services resources (such as instructor/classroom availability, budget and development schedule constraints). The initial assessment will often also include media layout design (i.e., for a computer-delivered interactive course, this would include a layout of the types of audio, video, and graphical presentations and simulations that would be required or useful in teaching the subject matter) and indications as to whether subject matter experts ("SMEs") would be necessary for consultation.

In the event that additional information is necessary or that the learning content cannot be designed within budget or logistical constraints, feedback can be provided upstream to the business strategy alignment processes to obtain revised initial content design requirements (such as in the form of a modified LEP). This feedback is indicated in Fig. 3 by the broken arrow going from step 320 to 310, with the broken nature of the arrows indicating the optional upstream aspect of this flow. All of the information included in the initial design assessment is used to produce a development plan that is sensitive to budget and logistical constraints and delivery timelines detailed in the LEP, with the development plan then being referenced by the later steps of content development process 300.

The results and/or conclusions detailed in the development plan as produced from the various analyses performed during content design 320 are then utilized for downstream content production 330, certification 340, and the delivery preparation 350 so as to ensure that the development of a course's deliverable learning content and materials remains consistent with the organization's business learning strategies and objectives and particular learning effort need (as reflected in the LEP and development plan). During content production 330, technology and organization services are leveraged to develop, license and build suitable learning content for the carefully designed course curricula. This content production 330 can include, for example, subject matter information collection and organization via SMEs, web-based training ("WBT") learning content object development for self-paced learning courses delivered via computer, ILT and virtual ILT ("v-ILT") curriculum layout and scheduling development, multi-media learning content development (including both pre-production and post-production development) for use in one or more courses of various types, packaging and integration with pre-existing learning content, negotiation of any licenses or rights to use purchased content, instructor development and training, and job-aid production.

As with the prior content design step 320, results of the ongoing content production step 330 can be communicated upstream to the content design step 320 to facilitate peer review and enable revisions to current design plans or even further upstream to enable LEP revisions if necessary. Once learning content has been finalized (or, optionally, a trail version capable of being reviewed has been finalized), a certification 340 is performed to review the output of the content production step 330. This certification compares the produced content against the design requirements of the LEP and development plan to ensure that the overall course development, production, and packaging are consistent with the licensing organization's business learning strategies and objectives before the content is certified and released for delivery. Any content that does,not match these design requirements is sent back to the content production 330 stage (or earlier stages) for revision as shown by the broken arrows.

After the design 320 and production 330 of course content and materials followed by their certification 340, the certified new or revised content is subjected to a delivery preparation step 350. For computer delivered instruction objects and the like, this delivery preparation step can include formatting or versioning of any content objects to be compliant with industry standards of electronic learning content delivery (such as the SCORM standard), and tagging and cataloging of the content objects to simplify their storage, retrieval, and ultimate delivery to learners. Content development process 300 ends by interfacing 360 with the delivery module 130 and providing the completed and properly formatted, versioned, tagged and cataloged deliverable learning content objects for learning use.

As will be readily appreciated by one of ordinary skill in the art, it will not always be the best approach for the learning solution 100 to internally develop deliverable learning content in response to a learning effort requested by the organization. Often, time constraints, subject matter constraints, and other logistical issues may make it more cost effective for the learning solution, to purchase or license previously developed learning content (completely ready for delivery to learners or otherwise) or commission the development of suitable learning content from third party providers. For example, if the organization needed employee training for a new computer system, it may be more efficient to purchase training or reuse training materials from the provider of the new computer system as opposed to creating new learning content internally from scratch. Therefore, the content management module 120 according to embodiments of the invention also contains processes that enable the procurement of third party learning content and services as well as integrating that content and services for delivery and administration within the control of the learning solution.

As was the case with internally developed, learning content, any learning content purchased or licensed from third party providers would need to meet the detailed budget allocation information, delivery timelines, and initial content design requirements established by the business strategy alignment module (such as is detailed in a finalized LEP). Also similar to how was described above with respect to the content development process 300, any content obtained from third party sources would be certified, formatted, versioned, tagged and cataloged in roughly the same manner as internally developed learning content. After receiving third party content, the content management module still, like in process 300, certifies the content against requirements established by the business alignment module. Any electronic learning content would then be versioned and/or formatted to be compatible or consistent with internally developed content (such as if, for example, digital self-paced learning content materials need to be converted into SCORM standard compliant format for later asynchronous electronic delivery to students). Such electronic learning content would then be tagged appropriately and placed into data stores to facilitate organization, delivery upon demand, and location/reuse of the content for the current and future learning efforts. In this manner, content management module 120 allows the learning solution 100 to take advantage of the most efficient mechanisms for assembling appropriate learning content for efforts needed by the organization.

As indicated above with respect to the discussion of Fig. 1, the mechanisms and media through which the delivery module 130 provides learning content to learners of the organization is adapted to service the overall business strategies and specific learning efforts needs of the organization by organizing delivery to learners in the most resource efficient and cost efficient manner. Suitable mechanisms and media by which learning content may be delivered to students according to embodiments of the present invention can include combinations of computer-delivered or web-based courses available over electronic networks (such as the Internet) for self-paced instruction, interactive virtual classroom instruction and related media (both video and animation) available over electronic networks which utilize instructors to lead classrooms of remotely located students, in person ILT, and paper-based products used in conjunction with by self-paced or instructor training

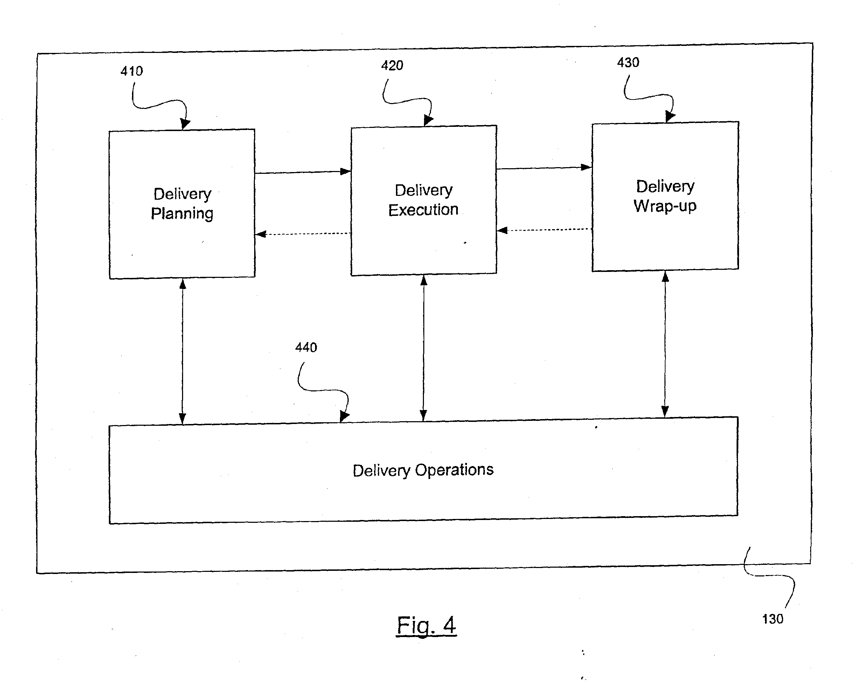

Turning now to Fig. 4, there is depicted the interaction of several delivery sub-modules which together interact to comprise a delivery module 130 of a learning solution 100 according to embodiments of the present invention. A delivery planning sub-module 410 and delivery execution sub-module 420 handle the coordination and actual delivery of learning content, while delivery wrap-up sub-module 430 collects and distributes data regarding completed learning content delivery. The delivery operations sub-module 440 concurrently serves as communication interface between the delivery module 130 and the other modules of the learning solution. The delivery operations sub-module 440 also serves as a communication interface between the delivery module 130 and third-party service providers to whom portions of learning efforts are contracted, such as education service providers ("ESPs") and value added distributors ("VADs"),

The delivery planning sub-module 410 contains various processes that plan for upcoming new learning efforts by forecasting demand (sessions), scheduling delivery and resources timelines and allocations, and confirming registration of learners prior to delivery execution. In preferred embodiments of the invention, coordination of such delivery planning processes are detailed in a delivery support plan ("DSP"). The DSP is a tool or document that is created and grows throughout the delivery process. For example, all of the information about a learning effort course that is being offered to the organization, including forecasted demand and/or actual demand from for the course from the organization, is reflected in the DSP. The information and data within the DSP can then be used to aid in future forecasting of demand for the same course or for similar or related courses by the delivery planning sub-module 410. The scheduling of resources and delivery coordination that occurs during delivery may include regional and global scheduling as necessary for a given learning effort. Additionally, in preferred embodiments of the invention, a scheduling synchronization tool may be used to facilitate the management of scheduling and decision making information, including the identity of the instructors who are teaching each course, the location of where the course is being taught, the allocation of materials and equipment that are being used by the instructor to teach the course, and the usage of any electronic resources for virtual instruction.

The delivery execution sub-module 420 is communicatively coupled downstream from the delivery planning sub-module 410. This sub-module contains processes that coordinate the occurrence of field trials, training sessions for instructors in new course curricula, distribution of session materials (e.g., manually for instructor lead training (ILT) and printed materials, and electronically for virtual ILT and classrooms, and Web-based or other self-paced computer-delivered instruction), and session set-up and breakdown processes. For example, the training for instructors can comprise helping them learn how best to teach certain content within changing course curricula by providing lists of recommended goals for the instructor to accomplish during the course.

As depicted in Fig. 4, the delivery wrap-up sub-module 430 is communicatively coupled downstream from the delivery execution sub-module 420. The delivery wrap-up sub-module 430 contains processes which close delivery execution sessions and generate delivery-related data for quality control checks and performance metrics for learning effort and delivery success. Quality control checks can relate to the management of the performance and quality of instruction, including solely computer-delivered learning content and learning content delivered by both internal and third party instructors. For example, instructors could be measured against pre-defined standards of instruction satisfaction by having students complete surveys or checklists that are later reviewed and correlated with other performance metrics (such as learning-output performance metrics like raw student results on certification exams administered during a course). The delivery wrap-up sub-module 430 also collects relevant delivery-related performance metrics data for reporting via the delivery operations module 440, including, for example, student course attendance, time it takes for an average student to complete a self-paced course unit, student scores on tests, instructor hours, etc.

As described above, the delivery operations sub-module 440 may serve as a communication interface between the delivery module 130 and third-party providers, such as ESPs and VADs and as an interface with other modules of learning solution 100. Other processes that may be contained within this sub-module address delivery process improvement, financial management, resource management, facilities management, performance analysis, delivery support plan maintenance, instructor certification, vendor/supplier management, remote learning services coordination, translation and localization of courses, archiving of courses, and business partners/VAD program administration. In an embodiment, the scheduling tool described above with regard to the delivery planning sub-module 410, may also be used to help in resource management and facilities management by the delivery operation sub-module 440. Such resource management would include the management of instructors by determining their eligibility to teach a certain curriculum and by cultivating their career growth while facilities management would involve managing the buildings and equipment necessary for delivery of the curriculum. Further, instructor certification processes can interface with processes for training instructors (described above and contained in the delivery execution sub-module 420) to make certain that internal instructors, as well as third-party instructors, meet minimum standards of effectiveness.

Referring back to Fig. 1, embodiments of the learning solution 100 according to the present invention require administrative function support which is provided by the learning administration, module 140. The learning administration module 140 coordinates the process that respond to various administrative factor inputs as necessary to successfully operate and manage a global learning system. The administrative processes according to the present invention allow, inter alia, students to enroll for courses, instructors to finalize "grades" or other indicia of course passage, and learning administrators to request and reserve resources for specific classes. While similar administrative functions are present in various common learning environments, such as in traditional colleges and universities, the processes employed in these traditional environments to perform these functions are not capable of integrating these functions into a learning solution that enables alignment with business strategies by, among other things, generating performance metrics.

Specific learning administrative functions that may be provided by a learning administration module 140 in embodiments of the present invention include, but are not limited to, enrolling students in courses, wait listing students enrolled for coursed that are closed, providing documentation to training coordinators, creating new user profiles, confirming enrollment in a specific course, adding a course session to the learning system and notifying the instructor by e-mail, developing and approving course catalogs and entering the approved catalogs into the learning system, adding and reserving class resources, sending students pre-course materials, adding and modifying course locations, canceling instructor sessions and unbooking allocated resources, deleting scheduled meetings, distributing notices of changes by sending e-mails to interested parties, updating student transcripts and attendance information, administering on-line course and instructor evaluations, mailing course completion materials to students, and sending course completion or passage/certification records to human resources for employee files.

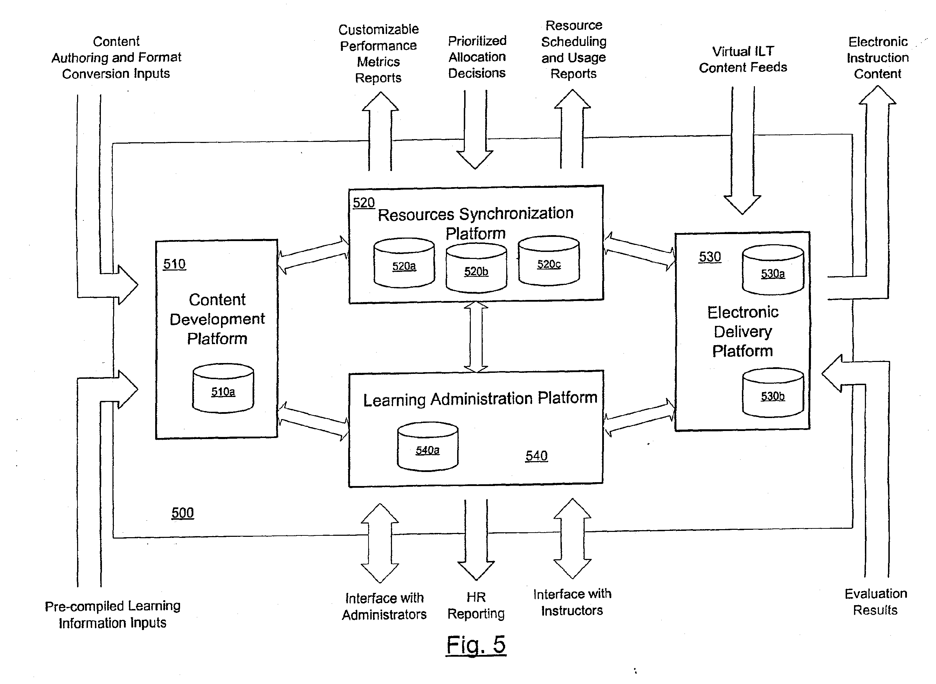

In embodiments of the present invention, the learning solutions compile, track, report and utilize performance metrics to assist in ensuring that learning efforts provided by the solution coincide with business strategies and priorities in all aspects of learning including the identification and prioritization of learning needs, the selection of learning approaches, and the development of learning content, and the coordination and delivery of learning instruction. The performance metrics approximate the objective indicia that are typically used to gauge success in traditional business units such that the performance of specific learning efforts or the learning solution as a whole can be measured in a manner similar to how the organization measures performance in more traditional performance-driven areas of their core business. Various performance metrics can be collected, tracked compiled, and reported automatically by information gathering and sorting tools, such as is described below with respect to FIG. 5.

Performance metrics can include learning-output metrics, learning-performance metrics, and learning-impact metrics. Learning-output metrics focus upon easily quantifiable objective measures of the amount and delivery success of learning services or products provided by a specific learning effort or by the learning solution (or parts thereof). For further illustration by way of examples, learning output metrics can include the amount of self-paced computer-delivered course hours developed internally for a given learning effort by the content management module (including high-fidelity content, low fidelity content, and total content), the number of employees who attend a given ILT course, the number of instructor course-hours provided by the entire solution, the number of student hours of instruction delivered by the solution to employees of the organization, and the number of new courses offered in a given time frame. Learning-output metrics therefore focus upon output levels, and not directly on the quality, of the learning solution and the learning efforts the solution oversees and provides. Learning-performance metrics and learning-impact metrics, however, both attempt to capture and reflect the quality of the learning solution and individual learning efforts.

Specifically, learning-performance metrics provide subjective and objective feedback regarding how effective a learning effort was in teaching the students the desired concepts or skills. This category of performance metrics can include tabulations from subjective surveys of students regarding a recently-completed course (e.g., containing questions such as "Did this class provide the right detail and level of information for you?" or "Were the examples presented in this course relevant to your business/marketplace?") as well as objective measures of learning performance (such as test results immediately following the course, or third party employee certification results).

Learning-impact metrics are objective and subjective measures of performance of the learning solution and its individual learning efforts which capture and reflect the transfer of knowledge from the training received to appropriate uses in the trained employees' work environments and, preferably, ultimately to the organization's overall benefit and return on its learning investments. Learning-impact metrics that are designed to measure the transfer of knowledge to the work environment, for example, can include measures in the decrease in specific workplace accidents following a learning effort focusing on safety training, and measures regarding the change in production speed and quality in the output of a manufacturing facility following training regarding more efficient techniques. Concurrently, learning-impact metrics that capture the return on learning investment can, for example, measure the change in gross sales generated per each salesperson employee following the completion of a learning effort which taught ways to competitively distinguish the organization's products over competitors' products.

As described above, embodiments of the learning solution provided according to the present invention are "outsourceable" in that they can either be outsourced by the learner organization (whereby the processes of the learning solution are implemented by a third party learning services provider under contract to the learner organization) or can be implemented internally by a subunit within the learner organization (as, for example, an independent learning business unit within the "outsourcing" organization). In embodiments of the invention wherein a learning services business unit within an organization provides learning services to other business units within the organization, the learning services business unit would still feel the need to satisfy customers as it would be responsible for generating a "profit" by meeting predefined performance metrics set by the other business units of the organization (that are requesting and receiving the learning services) and allocating learning effort charges as expenses to those business units as appropriate. The performance metrics as described above can be advantageously employed in this regard.

In preferred embodiments of the present invention the learning solution is provided by an independent business entity according to a service level agreement with an organization in need of learning services outsourcing. A service level agreement is a contract between the learning solution services provider and the licensing (i.e., outsourcing) organization that establishes the requisite quality and effectiveness levels of the learning solution services as measured by one or more pre-selected performance metrics.

The terms of a service level agreement may require (as compared with the levels measured before the implementation of a given learning effort), for example, minimum learning output metrics values relating to increases in student enrollment and course hours, minimum learning-performance metrics relating to employee certifications, and minimum learning-impact metric increases regarding gross sales generated by each trained salesperson. Such an outsourced learning solution tracks and reports pre-selected performance metrics to the outsourcing organization on a continuous basis to facilitate cost allocation among appropriate business units or to specific learning efforts (equivalently, "training efforts"), and uses them within the learning solution to gauge the level of effectiveness of particular learning efforts in helping the organization reach desired business objectives and thus refine future learning efforts and overall strategies.

As described above, the learning solution 100 also preferably includes a business management module that manages the overall lifecycle of a learning initiatives and efforts and attempts to provide continuous improvement to currently ongoing and future learning initiatives and efforts. The business management module assesses the solution's compliance with overall strategic initiatives and business priorities of the learner organization by reviewing data for various types of these performance metrics as it is tracked and compiled by various aspects of the learning solution. Notably, such performance metrics are necessary in many cases to allow the appropriate allocation of charges for expenses incurred during the rendering of learning services to various entities in the learner organization.

Furthermore, the business management module provides the learning solution with the capability to manage the overall lifecycle of learning initiatives and efforts and to refine the processes employed to identify, develop, manage, and deliver ongoing and future learning initiatives and efforts in a "profit" driven manner. To achieve this end, the business management module leverages selected performance metrics on a regular basis, such as weekly, monthly, quarterly and/or annually, in various learning solution business management processes to ensure that the learning solution is satisfying its "clients" and utilizing resources to do so in the most efficient (i.e., "profitable") manner possible. For example, the business management module can compile weekly status reports and forecasts from selected benchmark performance metrics (such as the hours of high definition web-based learning content actually delivered in the week) to assist in managing workload of learning solution personnel and predicting possible future learning resource shortages or conflicts. Likewise, the business management module can collate and report development and delivery-related performance metrics on a monthly basis as a comparison to commitments required by a relevant service level agreement, and generate appropriate billing reports regarding learning services rendered. Additionally, quarterly reporting of performance metrics can report longer-term performance of the learning solution in comparison to minimum performance levels stipulated in a service level agreement. Such quarterly reports can be used by the business management module to forecast future fiscal year learning services budgets for a learner organization or for making, as necessary, adjustments to the organization's current learning blueprint in conjunction with the business management module. Finally, yearly (or longer term) reports also containing compilations of relevant performance metrics data, indications regarding the level of success in meeting service level agreement commitments, and financial cost/performance information can be used by the business management module to generally re-assess the business strategies and priorities being pursued by the learning solution, including in negotiating output level criteria for future service level agreements, in assisting the business strategy interlock module in preparing new learning blueprints for upcoming fiscal years, and in preparing learning budgets and budget allocations for the new blueprint.

The operation of the modules of learning solution 100 is preferably facilitated by various information sharing tools provided by a computing network. Fig. 5 schematically depicts a network 500 of learning platforms that communicate to provide coordination and synchronization of learning content development, delivery and management so as to enhance the learning solution's response time to organization, instructor, student, and/or resource concerns and issues. The learning platform network 500 according to such embodiments integrates various electronic tools to provide the information sharing capabilities needed by a learning solution services provider to efficiently implement and manage learning efforts according to the business desires of a complex learner organization. As shown in Fig. 5, the preferred learning platform network 500 comprises a content development platform 510, a resources synchronization platform 520, an electronic delivery platform 530, and a learning administration platform 540 all communicating electronically with one another. Each of the platforms that comprise the network 500 are composed of suitable servers, storage devices (including databases), memory devices and support hardware as is known in the art of computer networks to achieve the functions of each platform as described herein.

To implement the above-described learning administrative functions, the network 500 of the present invention utilizes a learning administration platform 540, preferably having a menu-driven and/or graphical user interface, that facilitates system management by providing users with the ability to manage the administration of the learning solution on-line by accessing information stored on the network 500. This platform enables learning administrators and human resources ("HR") managers of the organization to, among other things, instantly view updated student transcripts (i.e., records of learner training efforts and results), listings of group members, and courses for which specific group members are eligible to enroll. The learning administration platform 540 also provides electronic information management tools that facilitate administrator functions such as, inter alia, creating student records, enrolling students in courses, adding students to waitlists, and approving or denying requests for enrollment. Thus, the on-line program facilitates and enhances the present invention's execution of specific learning administrative functions that are necessary to support a learning solution 100 according to the present invention. Furthermore, instructor access is also provided whereby course records for students can be viewed and/or updated (such as entering attendance or test results for students of conventional ILT courses).

As shown in Fig. 5, the network 500 also interfaces with various users (including learning solution administrators) to facilitate the dissemination of learning resource allocation information, on an as-requested basis, and thereby enable informed decision making regarding the utilization of various learning resources (personnel, electronic, physical, etc.). The resources synchronization platform 520 of the learning solution network 500 collects and tracks resource availability information regarding deliverable learning content, and delivery resources (classrooms, virtual classroom technology, target learner participation windows, instructor schedules) and organizes this information into sortable scheduling and usage reports that allow learning administrators to make and/or modify schedules and resource allocations for learning content delivery.

The resources synchronization platform 52,0 of the learning solution network 500 also provides a means whereby important learning-output metrics are monitored through real-time access to critical information (such as by receiving information from electronic delivery platform 530 regarding student attendance at virtual classrooms and storing that information within the resources synchronization platform 520). The reports provided through the interface with the resources synchronization platform 520 thereby provides administrators with up to date resource allocation data presented in a logical, intuitive and valuable manner that promotes efficient learning content delivery and utilization of constrained learning solution resources. As resource allocations are modified by administrators after viewing appropriate reports, these allocations are stored and reflected in future allocation reports until delivery is completed or until further allocation modifications are made.

Optionally, the resources synchronization platform 520 further provides a means whereby learning-performance and learning impact metrics are compiled and tracked. Preferably, these metrics are collected in real-time from various portions of network 500 (such as test score information collected by the electronic delivery platform 530 or manually entered by instructors and stored in the learning administration platform 540, or learning impact metrics data entered by learning administrators via the learning administration platform 540). The resources synchronization platform 520 similarly provides various reports of these performance metrics to assist administrators in performing various processes of the business management module as described herein, including the reconsideration and revision of business strategies and priorities, associated learning budget allocations, and service level agreements.

Content development platform 510 of network 500 automates many functions associated with the content management module 120 by providing content authoring and compiling tools. As shown in Fig. 5, the content development module provides user interfaces for developing new or modified learning content, accepting learning content information (such as from external third party sources), certifying, versioning and formatting new learning content data to comply with downstream network requirements (such as formatting self-paced computer-delivered learning content objects to comply with SCORM standards), and tagging and cataloging new or modified learning content for storage in a learning content data warehouse. Content development platform 510 also provides access to electronic authoring tools for formatting and compiling learning content information into computer-deliverable electronic learning objects.

Electronic delivery platform 530, as depicted in Fig. 5, provides network 500 with its primary interface with the target learners (i.e., the employees of the learner organization). The electronic delivery platform 530 has tools that enable asynchronous delivery of computer delivered instructional content (preferably remotely over a secure network, such as via a web-browser over a secure WAN) to authenticated target learners and track testing and/or certification results from examinations administered in conjunction with electronically delivered instruction. Additionally, platform 530 also provides tools that enable target learners to participate remotely in live classroom instruction via virtual classroom technologies.

In use, learning solution network 500 facilitates the various processes as described above that embody learning solutions according to the present invention. By way of illustration, once a new action plan calling for new or modified computer-deliverable self-paced instruction content has been sufficiently finalized in response to a learning effort proposal (such as in the form of the LEP prepared for and provided to the content management module 120), content developers can utilize the various electronic content authoring and compilation tools of the content development platform 510 to author electronic learning content objects. Such tools, among other things, enable the creation and organization of object-oriented asynchronous computerized learning courses (henceforth, "OOAC courses") as well as the development of their constituent electronic learning content objects. The tools provided by the content development platform 510 also enable importing of third party information, content, and objects for incorporation into OOAC new or revised courses. Such electronic learning information and in-development learning content objects are stored in a developing content database 510a until they are ready (i.e., compiled, formatted, versioned, tagged and cataloged) for electronic delivery to students. The completed content objects are then electronically communicated to the resources synchronization platform 520 for storage and subsequent delivery.

Resources synchronization platform 520 accepts new or modified learning content from the content development platform 510 and stores it in a content warehouse database 520a (along with pre-existing content objects) according to appropriate tags and catalog identifiers assigned by the content development platform 510. These tags and identifiers allow the network to locate and identify content objects relating to particular courses and deliver the appropriate objects upon subsequent demands initiated via the electronic delivery platform 530. The synchronization platform receives electronic requests for learning content from the electronic delivery platform 530 and initiates processing of these requests by retrieving the requested data from the content warehouse database 520a.

On an ongoing basis, the resources synchronization platform 520 simultaneously provides an interface for learning administrators to review the current allocation of learning resources (as detailed in a resource schedule database 520b) through customized scheduling and usage reports, and then use these reports for making resource allocation decisions (using a graphical interface of a scheduling tool provided by the resources synchronization platform 520) as appropriate based upon system constraints, current allocations, demands by learning efforts for learning solution resources, and the relative priorities of these competing demands for resources. Any resource allocation decisions made in this manner are appropriately reflected in the resource schedule database 520b. The allocation data stored in the resource schedule database 520b, and thus the reports provided by the resources synchronization platform 520, can include the current allocations and availabilities of resources used by all learning efforts of the learning solution 100, including classrooms, instructors, virtual classroom technology, OOAC delivery technology, as well as include delivery constraint information relating to target learner participation windows and organization-imposed delivery deadlines. In this manner, decision making regarding the scheduled delivery of learning content (both electronic and otherwise) can be synchronized across an entire organization in a proactive manner to avoid schedule conflicts and inefficient usage of finite learning resources.

Simultaneously, the resources synchronization platform 520 preferably provides means for accessing correlated performance metrics data that is automatically collected or manually inputted across the entire platform and stored for purposes of enabling the business management of the learning solution. These performance metrics can include learning-output performance metrics (such as may be, for example, automatically tracked by the resources synchronization platform 520 or electronic delivery platform 530 or inputted manually by instructors into the learning administration platform 540), learning-performance metrics (such as may be, for example, automatically tracked by the electronic delivery platform 530 or inputted manually by instructors into the learning administration platform 540), or learning impact metrics (such as may be, for example, tracked and inputted manually by a learning solution administrator directly into the performance metrics database 520c). A performance metrics tracking and reporting tool of the resources synchronization administration platform 520 provides electronic access for learning administrators to the performance metrics database 520c and thereby enables them to generate up-to-date-reports regarding performance metrics they select at any time and for any time period. In this manner, the performance metrics data that enables the learning solution to be run like a business (or business unit) can be centrally collected and more easily utilized, which may be useful, for example, where minimum performance levels are dictated in a service level agreement or where learning costs must be allocated among various learning efforts and associate business units. Understandably, reports detailing such performance metrics data can be used by the business management module and business strategy alignment modules as described above to assemble, reassess and revise learning blueprints, learning solution budgets and overall strategies and priorities as necessary.

Electronic delivery platform 530, as shown in Fig. 5, contains a delivery management database 530a and a delivery results database 530b. The delivery management database 530a contains catalog and learner access information relating to courses and related learning content so as to control access by various target learners (i.e., employees) to appropriately authorized learning content. This delivery management information is used by a learner delivery interface to provide virtual classroom data (as received from live virtual content feeds) and OOAC course data electronically to authenticated student users upon demand. Data regarding target learner user participation (or, alternatively, "attendance") in any synchronous or asynchronous electronically-delivered learning content is logged in the delivery results database 530b. Likewise, the each target learner users' scores for any electronically administered tests, examinations, or evaluations are also tabulated in the delivery results database 530b. The information of the delivery results database 530b is electronically accessible via the resources synchronization platform 520 by learning solution administrators to facilitate compiling and tracking learning effort progress and results and to generate and report performance metrics as required by any service level agreements as described herein. Similarly, data in the delivery results database 530b can be electronically transmitted to the learning administration module for storage in student records that may be accessed, viewed, and/or augmented by learning system administrators, course instructors, or HR personnel of the organization as appropriate.

The learning administration platform 540 contains a registrar database 540a which contains student (target learner) records. Registrar database 540a can be accessed electronically via various interfaces of the learning administration platform 540, preferably all graphical and/or menu-driven, by HR personnel of the learner organization (to confirm that various personnel have undergone required training), and by instructors and administrators of the learning solution. Through the use of these administration interfaces, learning administrators and human resources ("HR") managers of the organization are able to, among other things, instantly view updated student transcripts (i.e., records of learner training efforts and results), listings of students, and courses for which specific students (or groups of students) are eligible to enroll as detailed in registrar database 540a. The system manager program also allows learning solution administrators to perform functions such as, for example, creating student records, enrolling students in courses, adding students to waitlists, and approving or denying requests for enrollment. Instructors are able to view student records and transcripts, as well as enter student grades and attendance data for courses that they are teaching (for situations where such information is not electronically collected and reported via the electronic delivery platform 530). Such student records are all organized and stored within the registrar database 540a to facilitate their access and utilization by elements of the learning solution and the learner organization.

While exemplary embodiments of the invention have been shown and described herein and in the attached appendices, it will be obvious to those skilled in the art such embodiments are provided by way of example only. Numerous insubstantial variations, changes, and substitutions will now be apparent to those skilled in the art without departing from the scope of the invention disclosed herein by the Applicants. Accordingly, it is intended that the invention be limited only by the spirit and scope by the claims as appended hereto.

## Claims

1. A method for aligning employee learning efforts with strategic business goals and priorities of an employer organization, said method comprising:
identifying business goals and strategies of the employer organization; said business goals and strategies having priorities relative to one another by said employer organization;
designating business tracts and initiatives for sorting potential learning efforts of said employer organization into, said tracts and initiatives correlating to said goals and strategies;
reflecting said relative priorities of said goals and strategies by assigning budget allocations to said tracts and initiatives;
receiving requests from said organization for learning efforts to train said employees; and
sorting said requests into tracts or initiatives;
selecting appropriate learning effort approaches for each received request, said appropriate learning effort approaches being subject to said budget allocation for said tract or initiative into which each said learning effort request is sorted.

2. The alignment method according to claim 1, wherein said designating of tracts and initiatives comprises creating a learning blueprint, said blueprint assisting in said sorting of said requests.

3. The alignment method according to claim 2, wherein said learning blueprint details said budget allocations for said tracts and initiatives.

4. The alignment method according to claim 2, wherein said learning blueprint is revised as necessary to reflect significant changes in said business goals, strategies, and priorities.

5. The alignment method according to claim 1, further comprising delivering instruction according to said learning effort approaches.

6. The alignment method according to claim 5, wherein said delivering of instruction comprises synchronous training and asynchronous training.

7. The alignment method according to claim 5, wherein said delivering of instruction is performed according to a mechanism selected from the group consisting of instructor led training, virtual classroom training, and self-paced training delivered via computer.

8. The alignment method according to claim 5, further comprising recording performance metrics during delivery of said instruction.

9. The alignment method according to claim 8, wherein said performance metrics are utilized to track and allocate appropriate costs to requesters of said learning efforts.

10. The alignment method according to claim 8, wherein said method is outsourced from said organization according to a learning services agreement, said agreement detailing minimum service levels, and said performance metrics are utilized to gauge whether said method is producing learning efforts meeting said service levels.

11. The alignment method according to claim 8, wherein said performance metrics are of types selected from the group consisting of learning-output metrics, learning-performance metrics, and learning-impact metrics.

12. The alignment method according to claim 1, wherein selecting said appropriate learning effort approaches comprises creating a learning effort plan, said learning effort plan detailing budget allocations, initial content design requirements, and delivery timelines for meeting said requests.

13. The alignment method according to claim 1, wherein selecting said appropriate learning effort approaches comprises creating an initial action proposal for each said request, said initial action proposal describing a proposed mode of delivery for necessary instruction and a proposed mechanism for obtaining content for said necessary instruction.

14. The alignment method according to claim 13, wherein selecting said appropriate learning effort approaches further comprises estimating a cost for developing and delivering a learning effort according to each said initial action proposal, and comparing each said estimated cost to an associated budget allocation.

15. The alignment method according to claim 14, wherein said initial action proposal is modified until said estimated cost satisfies said associated budget allocation.

16. The alignment method according to claim 14, wherein said cost is estimated according to a cost schedule detailing a standard set of charges for learning effort tasks performed at the request of said organization.

17. The alignment method according to claim 1, further comprising obtaining and managing suitable learning content for implementing said appropriate learning effort approaches.

18. The alignment method according to claim 17, wherein said obtaining of suitable learning content comprises developing content according to budget restraints, initial. content design requirements, and delivery timelines associated with said learning effort approaches.

19. The alignment method according to claim 17, wherein developing said content comprises either purchasing said content or creating said content.

20. A solution for providing an outsourceable learning services for training the members of an organization, said solution comprising modules of interrelated and interdependent business processes, including:
a business strategy alignment module containing related processes for recognizing and prioritizing business driven learning needs of said organization and implementing learning efforts to meet said needs;
a content management module containing related processes for designing, procuring and managing learning content necessary to implement said learning efforts;
a delivery module containing related processes for coordinating solution resources to provide instruction to said members; and
a learning administration module containing related processes for managing the availability, delivery and results of learning efforts in relation to said members.

21. The learning solution according to claim 20, further comprising a business management module, said business management module containing related processes for assessing whether said solution is meeting the business goals, strategies and priorities of said organization.

22. The learning solution according to claim 21, wherein said business management module assesses whether said solution is meeting the business goals, strategies and priorities of said organization by:
receiving performance metrics regarding operations of said learning solution from said content management module, said delivery module, and said learning administration module;
comparing said performance metrics against predetermined minimum service levels; and
revising the operations of said business strategy alignment module, said content management module, or said delivery module in an effort to have said performance metrics meet said predetermined minimum service levels.

23. The learning solution according to claim 22, wherein said predetermined minimum service levels are operational requirements agreed upon in a service level agreement between said organization and a learning services provider.

24. The learning solution according to claim 22, wherein said performance metrics are of types selected from the group consisting of learning-output metrics, learning-performance metrics, and learning impact metrics.

25. The learning solution according to claim 20, wherein said business strategy alignment module recognizes and prioritizes business driven learning needs of said organization by:
identifying business goals and strategies of said organization and assigning relative-priorities thereto;
receiving requests from said organization for learning efforts to instruct said members; and
selecting appropriate learning effort approaches for each received request, said learning effort approaches aligning with said business goals and strategies of said organization according to said relative priorities.

26. The learning solution according to claim 25, wherein said business strategy alignment module designates business tracts and initiatives for sorting potential learning efforts of said employer organization into, said tracts and initiatives correlating to said goals and strategies; and assigns budget allocations to said tracts and initiatives reflecting said relative priorities of said goals and strategies, wherein said tracts, initiatives and budget allocations facilitate selecting appropriate learning effort approaches for each received request.

27. The learning solution according to claim 25, wherein said designating of tracts and initiatives comprises creating a learning blueprint, said blueprint facilitating aligning learning efforts with said prioritized business goals and strategies of said organization.

28. The learning solution according to claim 27, wherein said learning blueprint details said budget allocations for said tracts and initiatives.

29. The learning solution according to claim 27, wherein said learning blueprint is revised as necessary to reflect significant changes in said business goals, strategies, and priorities.

30. The learning solution according to claim 20, wherein implementing learning efforts to meet said needs comprises estimating a cost for developing and delivering a proposed learning effort to satisfy requests by said organization for training, and comparing each said estimated cost to an associated budget allocation.

31. The alignment method according to claim 30, wherein said proposed learning effort is modified until said estimated cost satisfies said associated budget allocation.

32. The alignment method according to claim 30, wherein said cost is estimated according to a cost schedule detailing a standard set of charges for learning effort tasks performed at the request of said organization.

33. The learning solution according to claim 20, wherein said.content management module procures and manages learning content necessary to implement said learning efforts by developing content according to budget restraints, initial content design requirements, and delivery timelines provided by said business strategy alignment module.

34. The learning solution according to claim 33, wherein developing said content comprises either purchasing said content or creating said content.

35. A method for providing an outsourceable learning services for training the designated students of a learner organization, said method comprising:
said organization creating a service level commitment between a learning services provider, said service level commitment detailing minimum service levels of learning efforts to be provided to designated students by said service provider at the request of said organization;
said learning services provider prioritizing requests for learning efforts received from said organization according to business strategies and goals of said organization, identifying learning effort approaches to meet said requests, obtaining learning content for said learning effort approach, and delivering a learning effort containing said obtained learning content to said designated students; wherein
said obtained learning content and said delivered learning effort are compared against said minimum service levels so as to ensure that said minimum service levels of said service level commitment are met.

36. The method according to claim 35, wherein said prioritizing of requests and identifying of learning effort approaches to meet said requests comprises aligning of said outsourceable learning services with said business strategies and goals of said organization.

37. The method according to claim 36, wherein said aligning with said business goals and strategies of said organization comprises said learning services provider periodically identifying business goals and strategies of said organization and assigning relative priorities thereto.

38. The method according to claim 37, wherein said business goals and strategies are identified by designating tracts and initiatives representative of areas of instruction needed by said organization.

39. The method according to claim 38, wherein said tracts and initiatives are embodied in a learning blueprint, said blueprint assisting in identifying learning effort approaches to meet said requests.

40. The method according to claim 39, wherein said learning blueprint details said budget allocations for said tracts and initiatives.

41. The method according to claim 39, wherein said learning blueprint is revised as necessary to reflect significant changes in said business goals, strategies, and priorities.

42. The method according to claim 35, wherein said obtained learning content and said delivered learning effort are compared against said minimum service levels by receiving performance metrics regarding operations of said learning solution, comparing said performance metrics against said minimum service levels; and revising actions of said learning services provider in an effort to have said performance metrics meet said predetermined minimum service levels.

43. A learning solution support network adapted to facilitate information sharing among a learning services providing entity, said network comprising:
a content development platform, said content development platform containing electronic tools for receiving input relating to the compiling of instructional materials and generating output comprising learning content;
an electronic delivery platform, said electronic delivery platform containing electronic tools for delivering instruction to students, said delivering of instruction including asynchronous computer-delivered instruction and synchronous virtual classroom instruction, said delivered instruction incorporating said learning content;
a learning administration platform, said learning administration platform containing electronic tools for storing registrar information regarding said students and said instruction and catalog information regarding said learning content; and
a resources synchronization platform, said resources synchronization platform containing electronic tools for scheduling and allocating the utilization of learning resources in the delivery of said instruction and in the development of said learning content.

44. The learning solution support network according to claim 43, wherein said electronic delivery platform is in electronic communication with target students to deliver appropriate synchronous instruction as scheduled or asynchronous instruction upon demand.

45. The learning solution support network according to claim 43, wherein said electronic delivery platform is adapted to record performance metrics during delivery of said instruction.

46. The learning solution support network according to claim 45, wherein said performance metrics are of types selected from the group consisting of learning-output metrics and learning-impact metrics.

47. The learning solution support network according to claim 43, wherein said electronic delivery platform is adapted to connect remote students electronically to an instructor operating through a virtual classroom environment.

48. The learning solution support network according to claim 43, wherein said resources synchronization platform schedules delivery of instruction according to a mechanisms selected from the group consisting of instructor led training, virtual classroom training, and self-paced training delivered via computer.

49. The learning solution support network according to claim 43, wherein said resources synchronization platform provides an electronic interface for allocating the utilization of constrained learning resources subject to relevant instructor and student availabilities.

50. The learning solution support network according to claim 49, wherein said resources synchronization platform organizes allocation and scheduling information into sortable scheduling and usage reports that allow learning administrators to make and/or modify schedules and resource allocations for learning content delivery.

51. The learning solution support network according to claim 43, wherein said resources synchronization platform is adapted to compile and output reports detailing performance metrics data, said data measuring the development of learning content and the delivery of instruction to said students, said.performance metrics data being useful to assessing whether learning requirements of a learner organization are being met.

52. The learning solution support network according to claim 51, wherein said performance metrics data is collected electronically from said content development platform, said electronic delivery platform, and said learning administration platform to create said reports.

53. The learning solution support network according to claim 43, wherein said content development platform is adapted to accept external instructional content from third party sources and compile that instructional content into learning content compatible with said electronic delivery platform.
